# EUROPEAN PATENT APPLICATION

(11) **EP 4 711 222 A1**
(43) Date of publication of application: **18.03.2026**
(21) Application number: 24200265.7
(22) Date of filing: 13.09.2024
(51) Int. Cl.: B60T 13/74

(54) **REDUNDANT BRAKE SYSTEM WITH REDUNDANT WHEEL BRAKING**

(71) Applicant: KB Intellectual Property GmbH & Co. KG, 82049 Pullach (DE)
(72) Inventor: LIPTÁK, Gábor, 1046 Budapest (HU); DOHÁNY, Tamás, 7630 Pécs (HU); STRÉLI, Tamás, 80638 München (DE); KOKREHEL, Csaba, 1119 Budapest (HU); NEMETH, Huba, 1116 Budapest (HU); TOTH, Zoltan, 1046 Budapest (HU); HUSZÁR, Zsófia, 1097 Budapest (HU)

(57) **Abstract**

An electro-mechanical brake system (B) for a vehicle according to the present application comprises:
an electronic control unit (1),
a first and second electro-mechanical brake actuator (2a, 2b), adapted to brake front wheels of a vehicle,
a third and fourth electro-mechanical brake actuator (2c, 2d), adapted to brake rear wheels of a vehicle,
a first inverter (3a) and a second inverter (3b), connected to the electronic control unit (1),
a foot brake sensor module (5), adapted to receive a brake demand, wherein the foot brake sensor module (5) is connected with the electronic control unit (1),
wherein the first and second electro-mechanical brake actuator (2a, 2b) comprise a first coil (2a-1, 2b-1) and a second coil (2a-2, 2b-2), adapted to generate a braking force by moving an actuating member against a wheel,
wherein the third and fourth electro-mechanical brake actuator (2c, 2d) comprise a first coil (2c-1, 2d-1), adapted to generate a braking force by moving an actuator against a wheel,
wherein the first inverter (3a) is connected with the respective first coils (2a-1, 2b-1, 2c-1, 2d-1) of the first, second, third and fourth electro-mechanical brake actuator (2a, 2b, 2c, 2d), and
the second inverter (3b) is connected with the respective second coil (2a-2, 2b-2) of the first and second electro-mechanical brake actuator (2a, 2b).

Hence, an increased safety level can be provided.

## Description

The autonomous operation of vehicles, in particular commercial vehicles, is a comparatively new field of technology. More sophisticated autonomous functions require a special hardware infrastructure. Up to now, commercial vehicle systems require the presence and attention of the driver. However, in the future the driver will be less involved into the driving control task of the vehicle, therefore automated systems are going to take over more significant driving functions, which require increased reliability levels and consequently different type of system redundancies.

On the other side the transformation of the vehicles from an internal combustion engine to battery powered electric vehicles is a driver for substitution of the air supplied (pneumatic) brake systems.

Commercial vehicles nowadays use electro-pneumatic by-wire brake systems where the electronic part of the service brake control is realized as a single circuit control. In case of malfunction of the control electronics the driver is able to control the pneumatic part of the brake system by a foot because a pneumatic backup system acting on two circuits is still available. In case of battery powered electric vehicles, a pneumatic supply for other systems (e.g. gear shift, clutch system, etc.) is however not necessary anymore, and hence significant savings can be achieved by eliminating the pneumatic supplied brake system.

In case of highly automated vehicles where the driver is not in the control loop anymore, or even not available or present in the vehicle, the above brake system would be unsatisfactory, since there is no means which would substitute the brake control of the driver in case of malfunction of the single electronic control circuit. Therefore, some degree of safety has to be provided for the control of the brake system.

From prior art, document DE1 02008009043 A1 is known. It shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Further, document EP2794368 A1 is known from prior art. It shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

A technical problem of the present application can hence be seen in providing an electro-mechanical brake system with an increased safety level, in particular for battery powered electric vehicles.

This technical problem is solved by an electro-mechanical brake system according to claim 1 and a vehicle according to claim 13. Other advantageous embodiments of the present application are subject-matter of the dependent claims.

An electro-mechanical brake system according to the present application is designed for a vehicle and comprises:
an electronic control unit, a first and a second electro-mechanical brake actuator, adapted to brake front wheels of a vehicle, a third and fourth electro-mechanical brake actuator adapted to brake rear wheels of the vehicle, a first inverter and a second inverter, connected to the electronic control unit, and a foot brake sensor module, which is adapted to receive a brake demand, wherein the foot brake sensor module is connected to the electronic control unit.

The first and second electro-mechanical brake actuators comprise a first coil and a second coil, which are adapted to generate a braking force by moving an actuating member against the vehicle. The actuating member can for example be a lever. The coils are the coils of an electric motor. Furthermore, the third and fourth electric-mechanic brake actuator comprise a first coil, which is adapted to generate a braking force by moving an actuator against the wheel. Again, the actuator can be a lever.

The first inverter is connected with respective first coils of the first, second, third and fourth electro-mechanical brake actuator, and the second inverter is connected with a respective second coil of the first and second electro-mechanical brake actuator.

According to this system, the electro-mechanical brake actuators have a double actuation line, therefore the force modulation is redundant, which provides availability of the brake system even in the case of a failure.

All electro-mechanical brake actuators of the front axle have a double coil, which are separately controlled by the second inverter, wherein the first inverters control the electric-mechanic brake actuators of the front and the rear axle. This redundant brake system architecture is a redundant brake-by-wire system, where pneumatic components are fully eliminated from the brake system. By eliminating pneumatic components there is no need for large and heavy supply components like compressor and air tanks. Without pneumatics, noise emission is significantly reduced during operation of brake system (e.g. air exhaust noise).

Preferably, the foot brake sensor module comprises a first channel and a second channel, and the first channel is connected to the electronic control unit to transmit a brake demand to the electronic control unit, and the second channel is directly connected to the second inverter. From the second inverter, the second coils of the first and second electric-mechanic brake actuator actors can be energized, so that the first and second electro-mechanical brake actuator can be actuated. Herein, a malfunction or a failure of the electronic control unit can be compensated, so that at least the first and second electro-mechanical actuator at the front axle can perform braking functions, wherein the brake modulation can be adapted individually.

Preferably, the first inverter is connected to a first power supply, and the second inverter is connected to a second power supply. More preferably, the first power supply and the second power supply are batteries.

This solution provides two circuits with individual power supply, so that a backup energy source is present. The provision of batteries ensures quickly available power to the brake system.

Furthermore, preferably first, second, third and fourth wheel speed sensors are provided close to the first, second, third and fourth electro-mechanical actuator respectively and are connected to the electronic control unit. The wheel sensors measure wheels speeds of individual wheels and control and monitor braking actions.

Preferably, a first switch is provided between the first inverter and the first coils of the first and second electro-mechanical brake actuator, and a second switch is provided between the second inverter and the second coils of the first and second electro-mechanical brake actuator. The provision of these switches ensures that the power supply of the brake actuators from two different power sources is somehow controlled, so that only one of the coils becomes energized. Hence, the independence of the two coils can be ensured.

More preferably, the second coils of the first and second electro-mechanical brake actuator have the same size and functionality as the first coils of the first and second electro-mechanical brake actuator. This means that if any of the brake modulators of the electro-mechanical brake actuator on the front axle fail, the brake force on the front axis can be modulated sidewise independently in case of a single failure of one of the electro-mechanical brake actuators on the front axle (i.e. the first or second electro-mechanical brake actuator).

Preferably, the electronic control unit has a master function. More preferably, the second channel of the foot brake sensor module has a slave function, but is adapted to adopt the master function if a malfunction of the electronic control unit is detected.

Hence, the electronic control unit is in case of normal operation responsible for controlling the brake forces of all four electro-mechanical brake actuators, but in the case of a malfunction, if the ECU fails, then at least the first and second electro-mechanical brake actuator at the front axle can perform braking operations.

Preferably, the electronic control unit is adapted to detect a malfunction of one of the first, second, third and fourth electro-mechanical brake actuator and distribute the required brake force according to a brake demand to the remaining electro-mechanical brake actuators. Hence, the electronic control unit can still perform the brake control, and the remaining retardation can be provided by the remaining electro-mechanical brake actuators.

Preferably, the electro-mechanical brake system further comprises a trailer control module, which is connected with the electronic control unit. The trailer control module can be further preferably additionally connected with the foot brake sensor module, preferably with its second channel. Hence, control actions can also be forwarded to the trailer.

A vehicle according to the invention comprises the above-mentioned electro-mechanical brake system. Preferably, the vehicle is a commercial vehicle, more preferably an electric commercial vehicle, because electric commercial vehicles can fully eliminate pneumatic systems and hence can advantageously exploit the advantages of a brake-by-wire brake system.

In the following, a preferred embodiment of the present application is described with the appended figure.

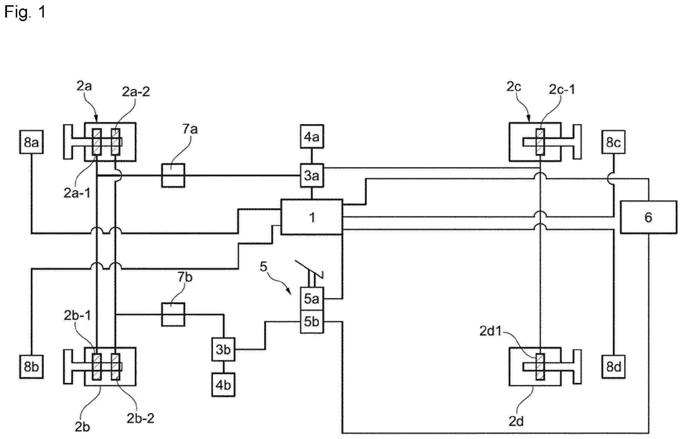

- Fig. 1: shows a basic wiring diagram of an electro-mechanical brake system according to the present invention.

An electronic control unit 1 is connected with a foot brake sensor module 5, in particular its first channel 5a. Furthermore, the electronic control unit 1 is connected with a first inverter 3a, which is again connected with a first power supply 4a. From the inverter 3a, a first coil 2a-1 of a first electric-mechanic brake actuator 2a can be energized, as well as a first coil 2b-1 of a second electric-mechanic brake actuator 2b. Also, the first inverter 3a is connected with a first coil 2c-1 of a third electro-mechanical brake actuator 2c on a rear axle, as well as a first coil 2d-1 of a fourth electro-mechanical brake actuator 2d. Hence, upon brake request on the foot brake sensor module 5, the first channel 5a provides a signal to the electronic control unit 1, providing a control signal to the first inverter 3a, which then performs the brake actions for all for electro-mechanical brake actuators 2a, 2b, 2c and 2d. However, there is a second channel 5b of the foot brake sensor module 5, which is directly connected to a second inverter 3b, which is again connected with the second power supply 4b. The second inverter 3b is connected to a second coil 2a-2 of the first electro-mechanical brake actuator 2a, and a second coil 2b-2 of the second electro-mechanical brake actuator 2b. Hence, the first and second electro-mechanical brake actuator 2a and 2b can be individually energized directly by the foot brake sensor module 5, without the electronic control unit 1. Furthermore, there is a first switch 7a, which is able to switch on or switch off the power from the first inverter to the first coils 2a-1 and 2b-1 of the first and second electric-mechanic brake actuators 2a and 2b, and furthermore there is a second switch 7b, which is able to switch on or switch off the energization of the second coil 2a-2 and 2b-2 of the first and second electro-mechanical brake actuators 2a and 2b. Furthermore, there are wheel speed sensors 8a, 8b, 8c and 8d, close to every electro-mechanical brake actuator. They provide the sensor signals to the electronic control unit 1. Finally, there is a trailer control module 6, which is connected with an electronic unit 1 and the second channel 5b of the foot brake sensor module 5. Herein, brake commands can also be transferred to a trailer. Hence, the electronic control unit 1 can control the front axle, the rear axle and the trailer, but the direct connection with the second channel 5b of the foot brake sensor module 5 can control only the front axle (second coil 2a-2 and 2b-2 of the first and second electro-mechanical brake actuators 2a and 2b). When the brake system is fully intact, the service brake actions can be controlled by the electronic unit 1 as a master. The electronic control unit 1 controls the electro-mechanical brake actuators 2a, 2b, 2c and 2d and the trailer control module 6. In case of a malfunction of the electronic control unit 1 or its power supply, the brake control is taken over directly by the second channel 5b of the foot brake sensor module, which then controls only the first and second electro-mechanical brake actuators 2a and 2b on the front axle (via the second coils 2a-2 and 2b-2 of the first and second electro-mechanical brake actuators 2a and 2b) and the trailer control module 6. In case of a malfunction of any electro-mechanical brake actuator on the front axle 2a or 2b, the brake control can be taken over the respectively other electro-mechanical brake actuator 2a and 2b, assisted by the central electronic control unit. A required blocking order can be provided by the wheel speed sensors 8a-8d, which are made available to all of the electro-mechanical brake actuators 2a, 2b, 2c and 2d via the electronic control unit 1.

In case of a malfunction of any electro-mechanical brake actuator 2c or 2d on the rear axle or the second power supply 4b, the brake control is not taken over, but the remaining retardation is provided by either the first or second electro-mechanical brake actuator 2a and/or 2b on the front axle (via its second coil(s) 2a-2 and/or 2b-2).

Such system is not limited by the above-mentioned embodiments. A brake command can be also provided to the electronic unit 1 by the vehicle management system or any other source. A vehicle can have four wheels with respective electro-mechanical brake actuators, but also more.

### LIST OF REFERENCE SIGNS

- 1: Electronic control unit
- 2a: First electro-mechanical brake actuator
- 2a-1: First coil
- 2a-2: Second coil
- 2b: Second electro-mechanical brake actuator
- 2b-1: First coil
- 2b-2: Second coil
- 2c: First electro-mechanical brake actuator
- 2c-1: First coil
- 2d: First electro-mechanical brake actuator
- 2d-1: First coil
- 3a: First inverter
- 3b: Second inverter
- 4a: First power supply
- 4b: Second power supply
- 5: Foot brake sensor module
- 5a: First channel
- 5b: Second channel
- 6: Trailer control module
- 7a: First switch
- 7b: Second switch
- 8a: First wheel speed sensor
- 8b: Second wheel speed sensor
- 8c: Third wheel speed sensor
- 8d: Fourth wheel speed sensor

- B: Electro-mechanical brake system

## Claims

1. Electro-mechanical brake system (B) for a vehicle, comprising:
an electronic control unit (1),
a first and second electro-mechanical brake actuator (2a, 2b), adapted to brake front wheels of a vehicle,
a third and fourth electro-mechanical brake actuator (2c, 2d), adapted to brake rear wheels of a vehicle,
a first inverter (3a) and a second inverter (3b), connected to the electronic control unit (1),
a foot brake sensor module (5), adapted to receive a brake demand, wherein the foot brake sensor module (5) is connected with the electronic control unit (1),
wherein the first and second electro-mechanical brake actuator (2a, 2b) comprise a first coil (2a-1, 2b-1) and a second coil (2a-2, 2b-2), adapted to generate a braking force by moving an actuating member against a wheel,
wherein the third and fourth electro-mechanical brake actuator (2c, 2d) comprise a first coil (2c-1, 2d-1), adapted to generate a braking force by moving an actuator against a wheel,
wherein the first inverter (3a) is connected with the respective first coils (2a-1, 2b-1, 2c-1, 2d-1) of the first, second, third and fourth electro-mechanical brake actuator (2a, 2b, 2c, 2d), and
the second inverter (3b) is connected with the respective second coil (2a-2, 2b-2) of the first and second electro-mechanical brake actuator (2a, 2b).

2. Electro-mechanical brake system (B) according to claim 1, wherein the foot brake sensor module (5) comprises a first (5a) and a second (5b) channel, and the first channel (5a) is connected to the electronic control unit (1), and the second channel (5b) is directly connected to the second inverter (3b).

3. Electro-mechanical brake system (B) according to one of the previous claims,
wherein the first inverter (3a) is connected to a first power supply (4a), and the second inverter (3b) is connected to a second power supply (3b).

4. Electro-mechanical brake system (B) according to claim 3, wherein the first power supply (4a) and the second power supply (4b) are batteries.

5. Electro-mechanical brake system (B) according to one of the previous claims,
wherein a first, second, third and fourth wheel speed sensor (8a, 8b, 8c, 8d) are provided close to the first, second, third and fourth electro-mechanical brake actuator (2a, 2b, 2c, 2d) respectively and are connected to the electronic control unit (1).

6. Electro-mechanical brake system (B) according to one of the previous claims,
wherein a first switch (7a) is provided between the first inverter (3a) and the first coils (2a-1, 2b-1) of the first and second electro-mechanical brake actuator (2a, 2b), and a second switch is provided between the second inverter (3b) and the second coils (2a-2, 2b-2) of the first and second electro-mechanical brake actuator (2a, 2b).

7. Electro-mechanical brake system (B) according to one of the previous claims,
wherein the second coils (2a-2, 2b-2) of the first and second electro-mechanical brake actuator (2a, 2b) have the same size and functionality as the first coils (2a-1, 2b-1) of the first and second electro-mechanical brake actuator (2a, 2b).

8. Electro-mechanical brake system (B) according to one of the previous claims,
wherein the electronic control unit (1) has a master function.

9. Electro-mechanical brake system (B) according to one of claims 2 to 8, wherein the second channel (5b) of the foot brake sensor module (5) has a slave function, but is adapted to adopt the master function if a malfunction of the electronic control unit (1) is detected.

10. Electro-mechanical brake system (B) according to one of the previous claims,
wherein the electronic control unit (1) is adapted to detect a malfunction of one of the first, second, third and fourth electro-mechanical brake actuator (2a, 2b, 2c, 2d) and distribute the required brake force according to a brake demand to the remaining electro-mechanical brake actuators.

11. Electro-mechanical brake system (B) according to one of claims 1 to 10, further comprising a trailer control module (6), which is connected with the electronic control unit (12).

12. Electro-mechanical brake system (B) according to claim 11, wherein the trailer control module (6) is additionally connected with the foot brake sensor module (5), preferably its second channel (5b).

13. Vehicle, comprising the electro-mechanical brake system (B) according to one of claims 1 to 12.

14. Vehicle according to claim 13, wherein the vehicle is a commercial vehicle.

15. Vehicle according to claim 14, wherein the commercial vehicle is an electric vehicle.
